# NEUE EUROPÄISCHE PATENTSCHRIFT

(11) **EP 2 133 615 B2**
(45) Veröffentlichungstag und Bekanntmachung des Hinweises auf die Entscheidung über den Einspruch: **03.12.2014**
(45) Hinweis auf die Patenterteilung: 19.01.2011
(21) Anmeldenummer: 09159443.2
(22) Anmeldetag: 05.05.2009
(51) Int. Cl.: F02M 35/10, F16L 37/113

(54) **Kupplungseinrichtung, insbesondere für eine Frischluftanlage**
Fresh air assembly and coupling device
Installation d'air frais et dispositif de couplage

(30) Priorität: 13.06.2008 DE 102008028393
(43) Veröffentlichungstag der Anmeldung: 16.12.2009
(73) Patentinhaber: MAHLE International GmbH, 70376 Stuttgart (DE)
(72) Erfinder: Stehlig, Jürgen, 72654, Neckartenzlingen (DE); Kaiser, Sven Alexander, 71336, Waiblingen (DE)
(74) Vertreter: BRP Renaud & Partner mbB Rechtsanwälte Patentanwälte Steuerberater

(56) Entgegenhaltungen:
- DE-A1- 4 110 676
- DE-B- 1 252 020
- DE-B3- 10 307 921
- DE-U1-202006 004 407
- GB-A- 866 629
- US-A- 3 203 714
- US-A- 4 856 581
- US-A1- 2003 184 091
- US-A1- 2005 121 912

## Beschreibung

Die vorliegende Erfindung betrifft eine Kupplungseinrichtung zum kommunizierenden Verbinden von zwei fluidführenden Komponenten, insbesondere bei einer Frischluftanlage.

Beim Zusammenbauen einer Frischluftanlage müssen verschiedene Komponenten der Frischluftanlage kommunizierend miteinander verbunden werden. Beispielsweise muss ein Luftfiltergehäuse mit einem Frischluftverteilergehäuse verbunden werden. Ebenso kann es erforderlich sein, Schläuche oder Rohre miteinander oder mit einem Gehäuse zu verbinden. Hierbei können Kupplungseinrichtungen zum Einsatz kommen.

Aus der US 2003/0184091A1. ist eine Kupplungseinrichtung, die alle Merkmale des Oberbegriffs des Anspruchs 1 beinhaltet, bekannt. Eine andere Kupplingseinrichtung ist aus der DE 103 07 921 B3 bekannt. Die vorliegende Erfindung beschäftigt sich mit dem Problem, für eine Kupplungseinrichtung eine verbesserte Ausführungsform anzugeben, die sich insbesondere dadurch auszeichnet, dass sie sich für eine Serienfertigung eignet, beispielsweise indem sie das Herstellen der kommunizierenden Verbindung besonders einfach ermöglicht. Des Weiteren soll die hergestellte Verbindung zum Beispiel für Wartungszwecke wieder einfach gelöst werden können.

Dieses Problem wird erfindungsgemäß durch der Gegenstand des Anspruchs 1 gelöst. Vorteilhafte Ausführungsformen sind Gegenstand der abhängigen Ansprüche.

Die Erfindung beruht auf dem allgemeinen Gedanken, die Kupplungseinrichtung mit zwei Fluid führenden Anschlusskörpern auszustatten, wobei der eine Anschlusskörper Rastelemente aufweist, während der andere Anschlusskörper mit einem daran drehbar angeordneten Sicherungsring ausgestattet ist, der zu den Rastelementen komplementäre Rastkonturen besitzt. In einer Verriegelungsstellung des Sicherungsrings hintergreifen die Rastelemente formschlüssig die Rastkonturen. In einer Entriegelungsstellung des Sicherungsrings sind die Rastelemente axial durch Durchgänge durchführbar, die der Sicherungsring in Umfangsrichtung zwischen den Rastkonturen aufweist. Durch die vorgeschlagene Bauweise lassen sich die beiden Anschlusskörper durch reine Axialbewegungen montieren und demontieren. Die Verriegelung bzw. die Entriegelung erfolgt dann durch ein Verdrehen des Sicherungsrings. Das Herstellen und das Lösen der kommunizierenden Verbindung der beiden Komponenten der Frischluftanlage lässt sich somit insbesondere ohne Drehbewegung zwischen den beiden Komponenten durchführen, was insbesondere dann von Vorteil ist, wenn vergleichsweise wenig Bauraum zum Drehen der Komponenten zur Verfügung steht. Dies ist bei Fahrzeugen, insbesondere in deren Motorraum regelmäßig der Fall. Somit vereinfacht die vorgeschlagene Kupplungseinrichtung, wenn sie bei einer Frischluftanlage zum Einsatz kommt, die Serienfertigung der Frischluftanlage bzw. den serienmäßigen Einbau der Frischluftanlage in ein Kraftfahrzeug. Ferner kann der Sicherungsring insbesondere "blind" betätigt werden, also auch an verdeckten und schwer zugänglichen bzw. schwer einsehbaren Positionen. Auch dies vereinfacht die Montage bzw. Demontage. Im Einzelnen wird erfindungsgemäß vorgeschlagen, dass der zweite Anschlusskörper einen axial abstehenden Kragen aufweist, in dem der Sicherungsring drehbar angeordnet ist und der eine Ringstufe einfasst, welche der zweite Anschlusskörper aufweist und an welcher der erste Anschlusskörper axial stirnseitig anliegt. Außerdem ist erfindungsgemäß vorgesehen, dass der in den zweiten Anschlusskörper eingesetzte Sicherungsring am zweiten Anschlusskörper verliersicher angeordnet ist.

Entsprechend ein vorteilhaften Ausführungsform können die Anschlusskörper in der Verriegelungsstellung des Sicherungsrings ausschließlich durch Kraftschluss, insbesondere durch Reibschluss, relativ zueinander gegen Verdrehen gesichert sein. Durch diese Bauweise kann auf zusätzliche Maßnahmen, die beispielsweise eine formschlüssige Verdrehsicherung realisieren, verzichtet werden. Insbesondere baut die Kupplungseinrichtung dadurch in ihrer Steckrichtung vergleichsweise kurz, also kompakt. Besonders zweckmäßig ist dabei eine Ausführungsform, bei welcher die gegen Verdrehen sichernde Kraft durch ein Verpressen einer Dichtung erzeugt wird, die in der Verriegelungsstellung die beiden Anschlusskörper gegeneinander dichtet. Hierdurch erhält die Dichtung eine Doppelfunktion. Des Weiteren kann bei vorhandener Dichtung auf zusätzliche Maßnahmen zum Erzeugen der gegen Verdrehen sichernden Kraft verzichtet werden.

Bei einer alternativen Ausführungsform kann auch eine Verdrehsicherung mittels Formschluss vorgesehen sein, z.B. in Form einer zwischen den Anschlusskörpern wirksamen Axialführung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen Längsschnitt durch eine Frischluftanlage im Bereich einer Kupplungseinrichtung,
- Fig. 2: die Kupplungseinrichtung in einem verriegelten Zustand in einer perspektivischen Ansicht (A), in einer Seitenansicht (B) und in einer axialen Ansicht (C),
- Fig. 3: Ansichten wie in Fig. 2, jedoch in einem entriegelten Zustand,
- Fig. 4: eine perspektivische Ansicht der Kupplungseinrichtung in einer auseinandergezogenen Darstellung,
- Fig. 5: ein Sicherungsring der Kupplungseinrichtung in einer perspektivi- schen Ansicht (A), in einer Seitenansicht (B) und in einer axialen Ansicht (C),
- Fig. 6: Ansichten wie in Fig. 5, jedoch eines Anschlusskörpers der Kupp- lungseinrichtung,
- Fig. 7: Ansichten wie in Fig. 6, jedoch eines anderen Anschlusskörpers.

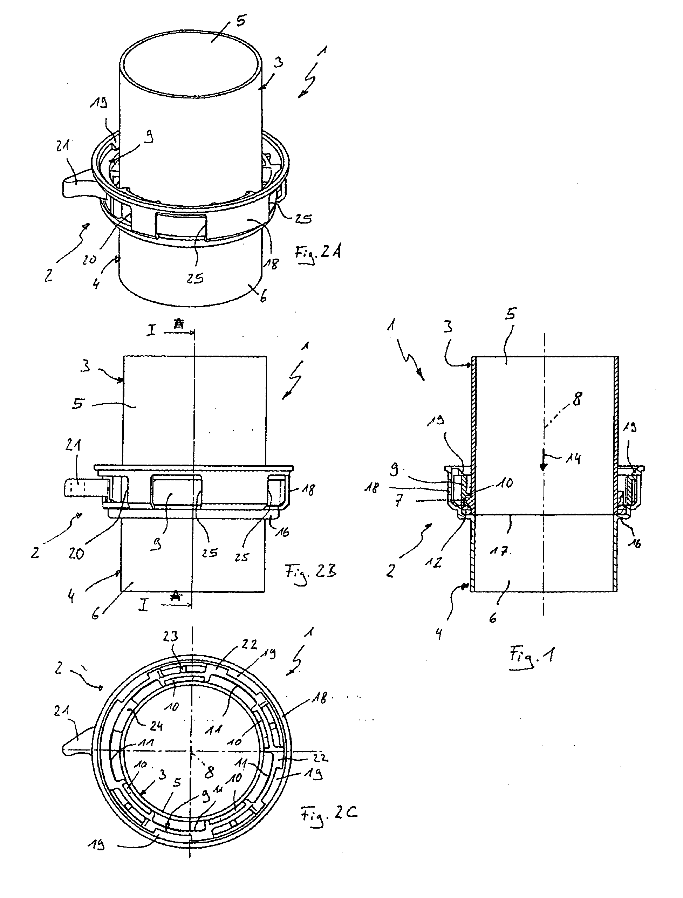

Entsprechend Fig. 1 umfasst eine Frischluftanlage 1 eine Kupplungseinrichtung 2, um zwei Komponenten 3, 4 der Frischluftanlage 1 kommunizierend miteinander verbinden zu können. Die Frischluftanlage 1 dient zur Versorgung einer Brennkraftmaschine mit Frischluft, wobei die Brennkraftmaschine insbesondere in einem Kraftfahrzeug angeordnet ist. Bei den beiden Komponenten 3, 4, die mit Hilfe der Kupplungseinrichtung 2 kommunizierend miteinander verbunden werden können, kann es sich um Leitungsabschnitte, Rohre, Schläuche sowie Gehäuse handeln, wie zum Beispiel ein Luftfiltergehäuse, ein Frischluftverteilergehäuse, ein Kompressorgehäuse, ein Verdichtergehäuse und ein Saugmodulgehäuse. Beispielsweise können mit der Kupplungseinrichtung 2 zwei Gehäuse miteinander verbunden werden oder zwei Leitungen bzw. Rohre bzw. Schläuche. Ebenso eignet sich die Kupplungseinrichtung 2 zum Verbinden eines Gehäuses mit einer Leitung, einem Rohr oder einem Schlauch. Darüber hinaus kann die hier in Verbindung mit der Frischluftanlage 1 vorgestellte Kupplungseinrichtung 2 auch völlig unabhängig von der Frischluftanlage 1 verwendet werden, um beliebige, von einer Frischluftanlage 1 unabhängige Komponenten, insbesondere ein Fluid führende Gehäuse, Leitungen, Rohre, Schläuche miteinander kommunizierend zu verbinden. Beispielsweise kann mit Hilfe der Kupplungseinrichtung ein Kühlmittelschlauch an einen Fahrzeugkühler angeschlossen werden.

Die Kupplungseinrichtung 2 weist zwei zylindrische Anschlusskörper auf, nämlich einen ersten Anschlusskörper 5 und einen zweiten Anschlusskörper 6. Der jeweilige Anschlusskörper 5, 6 kann dabei integral an der zugehörigen Komponente 3 bzw. 4 ausgeformt sein. Ebenso kann der jeweilige Anschlusskörper 5, 6 an der zugehörigen Komponente 3, 4 auf geeignete Weise angebaut sein. Beispielsweise kann der jeweilige Anschlusskörper 5, 6 an der zugehörigen Komponente 3, 4 einen Anschlussstutzen oder einen Endabschnitt bilden.

Der erste Anschlusskörper 5 weist an seiner Außenseite mehrere Rastelemente 7 auf, die in Umfangsrichtung voneinander beabstandet angeordnet sind und die radial nach außen vorstehen. Die Begriffe "Umfangsrichtung" und "radial" sowie weiter unten "axial" beziehen sich auf eine Längsmittelachse 8 der zylindrischen, insbesondere kreiszylindrischen, Anschlusskörper 5, 6. Der zweite Anschlusskörper 6 weist einen Sicherungsring 9 auf, der am zweiten Anschlusskörper 6 um die Längsmittelachse 8 verdrehbar gelagert ist. Dabei ist der Sicherungsring 9 zwischen einer Verriegelungsstellung und einer Entriegelungsstellung verdrehbar. Der Drehwinkel zwischen der Verriegelungsstellung und der Entriegelungsstellung, die jeweils Endlagen bilden können, ist relativ klein und liegt beispielsweise bei etwa 30° ± 10°. Der Sicherungsring 9 weist Rastkonturen 10 auf, die komplementär zu den Rastelementen 7 angeordnet sind, und zwar so, dass sie im montierten Zustand von den Rastelementen 7 hintergreifbar sind. Fig. 1 zeigt dabei einen verriegelten Zustand der Kupplungseinrichtung 2, bei dem der Sicherungsring 9 in seine Verriegelungsstellung verdreht ist. Dementsprechend hintergreifen die Rastelemente 7 die Rastkonturen 10 in der Verriegelungsstellung formschlüssig.

Entsprechend den Fig. 1-7 weist der Sicherungsring 9 außerdem Durchgänge 11 auf, die sich in Umfangsrichtung jeweils zwischen zwei benachbarten Rastkonturen 10 befinden und die ebenfalls komplementär zu den Rastelementen 7 angeordnet sind. Sofern der Sicherungsring 9 in seine Entriegelungsstellung verstellt ist, sind die Rastelemente 7 durch die Durchgänge 11 axial durchführbar. Das bedeutet, dass die beiden Anschlusskörper 5, 6 axial auseinander gezogen werden können, wenn der Sicherungsring 9 in seine Entriegelungsstellung verstellt ist. Zum Trennen oder Lösen der kommunizierenden Verbindung der Kupplungseinrichtung 2 ist somit keine Drehbewegung zwischen den Anschlusskörpern 5, 6 erforderlich. Das Trennen oder Lösen der Verbindung lässt sich durch eine reine Axialbewegung durchführen.

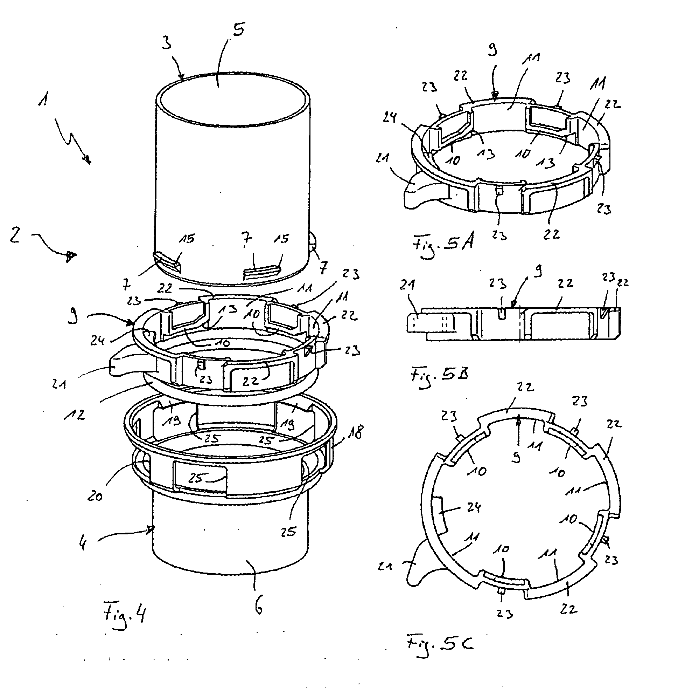

Entsprechend den Fig. 1 und 4 umfasst die Kupplungseinrichtung 2 außerdem eine Dichtung 12, zweckmäßig in Form eines O-Rings. Die Dichtung 12 ist dabei so angeordnet, dass sie den ersten Anschlusskörper 5 gegenüber dem zweiten Anschlusskörper 6 dichtet. Im Beispiel ist die Dichtung 12 so angeordnet, dass sie hauptsächlich radial dichtend wirkt. Hierzu ist sie radial zwischen den Anschlusskörpern 5, 6 verpresst, also elastisch komprimiert. Da sie im gezeigten Beispiel außerdem axial an einem der Anschlusskörper 5, 6 anliegt, besitzt sie außerdem eine gewisse axiale Dichtwirkung. Alternativ kann auch eine rein axial wirkende Dichtung 12 vorgesehen sein. Eine axial wirkende Dichtung 12 ist axial zwischen den Anschlusskörpern 5, 6 verpresst.

Im verriegelten Zustand der Kupplungseinrichtung 2 können die Anschlusskörper 5, 6 gegen ein Verdrehen relativ zueinander gesichert sein. Besonders vorteilhaft ist dabei eine Ausführungsform, bei welcher diese Verdrehsicherung ausschließlich durch Kraftschluss, und zwar insbesondere durch Reibschluss, realisiert wird. Hierzu kann in besonderer Weise die Dichtung 12 beitragen, indem diese entsprechend verpresst wird. Die Dichtung 12 besitzt einen relativ hohen Haftreibungswiderstand gegenüber den Anschlusskörpern 5, 6, wodurch diese bei einer entsprechenden Belastung der Dichtung 12 entsprechend gegen Verdrehen gesichert sind. Zusätzlich oder alternativ dazu kann auch eine mit Formschluss arbeitende Verdrehsicherung vorgesehen sein. Beispielsweise kann eine solche, hier nicht gezeigte separate Verdrehsicherung durch eine Längs- oder Axialführung realisiert werden, die zum Einen das Auffinden einer ordnungsgemäßen Steckposition erleichtert, in welcher die Anschlusskörper 5, 6 ineinander steckbar sind. Zum Anderen erleichtert die axiale Führung den Steckvorgang selbst. Eine solche, mit Formschluss arbeitende Axialführung, die gleichzeitig eine Verdrehsicherung bildet, kann beispielsweise durch wenigstens eine Nut-Feder-Verbindung realisiert werden, die an dem einen Anschlusskörper 5, 6 eine axiale Nut und am anderen Anschlusskörper 5, 6 einen radial abstehenden, sich axial erstreckenden Steg als Feder aufweist.

Der Sicherungsring 9 ist bei der hier gezeigten Ausführungsform vergleichsweise formstabil ausgestaltet, und zwar derart, dass der erste Anschlusskörper 5 nur dann axial in den zweiten Anschlusskörper 6 einsteckbar ist, wenn sich der Sicherungsring 9 in seiner Entriegelungsstellung befindet und wenn die Rastelemente 7 auf die Durchgänge 11 ausgerichtet sind. Das bedeutet, die kommunizierende Verbindung zwischen den beiden Anschlusskörpern 5, 6 kann nur dann hergestellt werden, wenn der Sicherungsring 9 seine Entriegelungsstellung einnimmt. Bei einer anderen, hier nicht gezeigten Ausführungsform kann der Sicherungsring 9 auch soweit formelastisch ausgestaltet werden, dass der erste Anschlusskörper 5 mit auf die Rastkonturen 10 ausgerichteten Rastelementen 7 axial in den zweiten Anschlusskörper 6 einsteckbar ist und mit den Rastelementen 7 an den Rastkonturen 10 verrastbar ist, wenn sich der Sicherungsring 9 in seiner Verriegelungsstellung befindet. Mit anderen Worten, die kommunizierende Verbindung zwischen den Anschlusskörpern 5, 6 lässt sich auch dann herstellen, wenn sich der Sicherungsring 9 in seiner Verriegelungsstellung befindet. Dabei verdrängen die Rastelemente 7 beim Einstecken die Rastkonturen 10 radial nach außen, was durch die Elastizität des Sicherungsrings 9 ermöglicht wird. Sobald die Rastelemente 7 an den Rastkonturen 10 vorbeigeführt sind, federn diese radial nach innen zurück, wodurch es zur Verrastung kommt, die nur noch durch Verdrehen des Sicherungsrings 9 in dessen Entriegelungsstellung gelöst werden kann. Diese Bauweise führt zu einer weiteren Vereinfachung der Montage, da hierzu der Sicherungsring 9 nicht mehr zugänglich sein muss.

Entsprechend den Fig. 4 und 5 besitzt der Sicherungsring 9 an den Rastkonturen 10 zweckmäßig in der Umfangsrichtung orientierte Einführschrägen 13. Diese Einführschrägen 13 erleichtern bei eingestecktem ersten Anschlusskörper 5 das Überfahren der Rastelemente 7 und Bewirken beim Verdrehen des Sicherungsrings 9 in die Verriegelungsstellung einen axialen Vorschub der Rastelemente 7 in der Einsteckrichtung, die zum Beispiel in Fig. 1 durch einen mit 14 bezeichneten Pfeil angedeutet ist. Bei der Einsteckrichtung 14 handelt es sich um eine relative Richtung, die sich auf den ersten Anschlusskörper 5 mit Bezug auf den zweiten Anschlusskörper 6 bezieht. Es ist klar, dass grundsätzlich auch der zweite Anschlusskörper 6 auf den ersten Anschlusskörper 5 aufgesteckt werden kann. Eine entsprechende Aufsteckrichtung ist dann der Einsteckrichtung 14 entgegengesetzt orientiert.

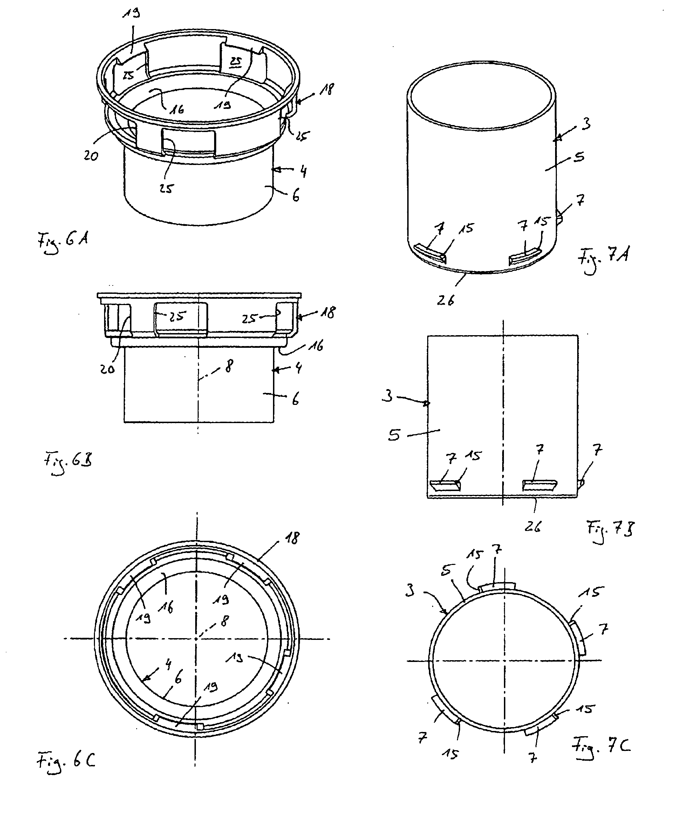

Entsprechend den Fig. 4 und 7 können die Rastelemente 7 optional in der Umfangsrichtung orientierte Einführschrägen 15 aufweisen. Diese Einführschrägen erleichtern ebenfalls beim Verdrehen des Sicherungsrings 9 das Überfahren durch die Rastkonturen 10. Sie unterstützen dabei das axiale Antreiben der Rastelemente 7 in der Einsteckrichtung 14. Insbesondere wirken die Einführschrägen 15 der Rastelemente 7 beim Verdrehen des Sicherungsrings 9 in die Verriegelungsstellung mit den Einführschrägen 13 der Rastkonturen 10 zusammen. Hierzu können die Einführschrägen 13 der Rastkonturen 10 und die Einführschrägen 15 der Rastelemente 7 bevorzugt mit gleichen Rampenwinkeln ausgestattet sein.

Abgesehen von den Einführschrägen 13 bzw. 15 erstrecken sich die Rastelemente 7 und die Rastkonturen 10 jeweils in der Umfangsrichtung, und zwar in einer gemeinsamen Ebene, die senkrecht zur Längsmittelachse 8 verläuft. Die Rastelemente 7 und die Rastkonturen 10 besitzen somit abgesehen von den Einführschrägen 13, 15 keine Steigung. Hierdurch können bei Zugbelastung der Anschlusskörper 5, 6 keine Momente auf den Sicherungsring 9 übertragen werden, wodurch die Gefahr reduziert ist, dass sich der Sicherungsring 9 unter Zugbelastung der Anschlusskörper 5, 6 selbsttätig in seine Entriegelungsstellung verdreht.

Entsprechend den Fig. 1-7 kann der zweite Anschlusskörper 6 eine Ringstufe 16 aufweisen, die sich in einer Ebene erstreckt, die quer zur Längsmittelachse 8 verläuft. An dieser Ringstufe 16 kommt der erste Anschlusskörper 5 im eingesteckten Zustand und bei in die Verriegelungsstellung verstelltem Sicherungsring 9 axial stirnseitig zur Anlage. Von besonderem Vorteil ist dabei die hier gezeigte Ausführungsform, bei welcher die beiden Anschlusskörper 5, 6 über einen Stoß 17 axial aneinander stoßen, wobei sie am Stoß 17 gleiche Durchströmungsquerschnitte besitzen. Der Übergang erfolgt somit ungestuft. Im Beispiel besitzen beide Anschlusskörper 5, 6 jeweils einen in axialer Richtung konstanten Durchströmungsquerschnitt. Hierdurch besitzt die Kupplungseinrichtung 2 einen extrem niedrigen Durchströmungswiderstand. Der erste Anschlusskörper 5 stößt mit seiner axialen Stirnseite an den Stoß 17, während der zweite Anschlusskörper 6 mit der Ringstufe 16 an den Stoß 17 anstößt.

Der zweite Anschlusskörper 6 weist hier außerdem einen Kragen 18 auf, der die Ringstufe 16 in der Umfangsrichtung umschließt und der in der Axialrichtung in Richtung zum ersten Anschlusskörper 5 vom zweiten Anschlusskörper 6 bzw. von der Ringstufe 16 absteht. In diesem Kragen 18 ist der Sicherungsring 9 drehbar angeordnet. Am Kragen 18 können Halteelemente 19 ausgebildet sein, die radial nach innen vorstehen und die den Sicherungsring 9 formschlüssig übergreifen, zumindest dann, wenn sich der Sicherungsring 9 in seiner Verriegelungsstellung befindet. Hierdurch ist der Sicherungsring 9 zumindest in der Verriegelungsstellung am zweiten Anschlusskörper 6 gegen ein axiales Herausziehen formschlüssig gesichert. Besagter Kragen 18 kann nun zumindest einen radialen Durchbruch 20 aufweisen, durch den ein Betätigungselement 21 des Sicherungsrings 9 radial hindurchragt. Der Durchbruch 20 ist dabei so dimensioniert, dass er ein Verstellen des Betätigungselements 21 innerhalb des Durchbruchs 20 ermöglicht, derart, dass der Sicherungsring 9 zwischen der Entriegelungsstellung und der Verriegelungsstellung verdrehbar ist. Insbesondere kann der Durchbruch 20 in Verbindung mit dem Betätigungselement 21 Endanschläge für die Verdrehbewegung des Sicherungsrings 9 definieren.

Der Sicherungsring 9 ist bevorzugt ein bezüglich der beiden Anschlusskörper 5, 6 separat hergestelltes Bauteil, das in den Kragen 18 einsetzbar ist. Dabei ist der Sicherungsring 9, wenn er in den zweiten Anschlusskörper 6 bzw. in den Kragen 18 eingesetzt ist, am zweiten Anschlusskörper 6 verliersicher angeordnet. Diese Verliersicherung wird für die Verriegelungsstellung durch die zuvor genannten Halteelemente 19 realisiert, welche den Sicherungsring 9 radial übergreifen. Für diesen radialen Übergriff weist der Sicherungsring 9 jeweils im Bereich der Durchgänge 11 radial nach außen vorstehende Kragensegmente 22 auf. Im Bereich der Rastkonturen 10 weist der Sicherungsring 9, insbesondere mittig, jeweils eine Nase 23 auf, die in radialer Richtung nur einen vergleichsweise kleinen Übergriff der Halteelemente 19 ermöglichen, wenn der Sicherungsring 9 in seine Entriegelungsstellung verdreht ist. Dieser im Vergleich zu den Kragensegmenten 22 kleine Übergriff sorgt für die erforderliche Verliersicherung in der Entriegelungsstellung des Sicherungsrings 9. Gleichzeitig ermöglicht der kleine Übergriff die Montage und Demontage des Sicherungsrings 9, da sich der Übergriff durch elastische Verformung des Kragens 18 einfach überwinden lässt. Die Nasen 23 können bezüglich der Kragensegmente 22 axial in Richtung zur Ringstufe 16 versetzt angeordnet sein. Hierdurch kann einerseits eine ausreichende Verliersicherung gewährleistet werden, während andererseits die Montage und Demontage durch das bereitgestellte Axialspiel erleichtert wird.

Der Sicherungsring 9 besitzt entsprechend den Fig. 2C und 5 optional ein Stegsegment 24, das radial nach innen vorsteht, und zwar etwa soweit wie die Rastkonturen 10. Dieses Stegsegment 24 befindet sich dabei in einem Umfangsabschnitt, der zwischen zwei Rastkonturen 10 liegt und in dem das Betätigungselement 21 angeordnet ist. Bei diesem Umfangsabschnitt besitzen die daran angrenzenden Rastkonturen 10 einen Umfangsabstand, der größer ist, als die Umfangsabstände zwischen den anderen Rastkonturen 10. Das Stegsegment 24 vereinfacht die Drehbarkeit des Sicherungsrings 9 und verhindert insbesondere ein Verkanten des Sicherungsrings 9 am ersten Anschlusskörper 5.

Zweckmäßig sind die Rastelemente 7 und die Rastkonturen 10 in der Umfangsrichtung asymmetrisch angeordnet, wodurch die Anschlusskörper 5, 6 nur in einer vorbestimmten relativen Drehlage ineinander gesteckt werden können, was die Montagesicherheit erhöht.

Der Kragen 18 besitzt bei der hier gezeigten Ausführungsform weitere Durchbrüche 25, die jeweils zwischen benachbarten Rastkonturen 10 angeordnet sind. Diese zusätzlichen Durchbrüche 25 erhöhen insbesondere die Formelastizität des Kragens 18, was die Montage und gegebenenfalls die Demontage des Sicherungsrings 9 vereinfacht.

Gemäß den Fig. 7A und 7B weist der zweite Anschlusskörper 5 an seiner beim Einstecken vorausgehenden axialen Stirnseite eine radial außen liegende Fase 26 auf, die das Eindringen in die Dichtung 12 erleichtert.

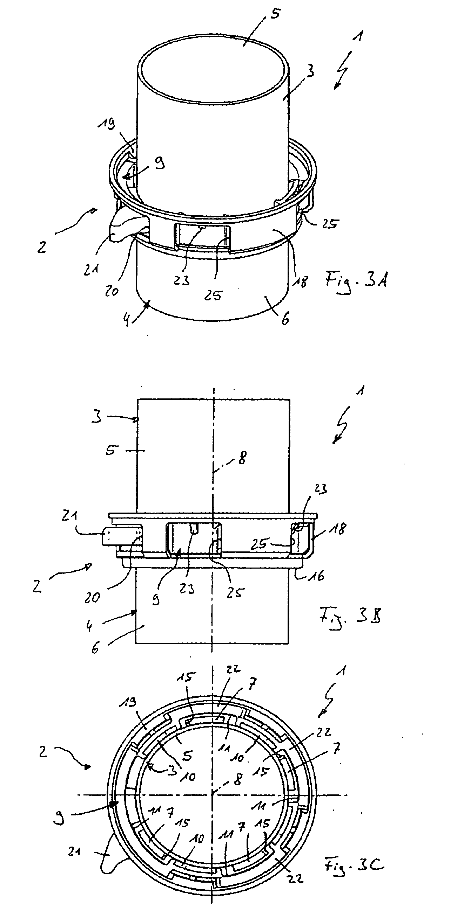

Fig. 1 zeigt den eingesteckten und verriegelten Zustand der Kupplungseinrichtung 2. Fig. 2 zeigt ebenfalls den eingesteckten und verriegelten Zustand der Kupplungseinrichtung 2. Fig. 3 zeigt den eingesteckten, jedoch entriegelten Zustand der Kupplungseinrichtung 2. Fig. 4 zeigt den demontierten Zustand der Kupplungseinrichtung 2. Fig. 5 zeigt den Sicherungsring alleine. Fig. 6 zeigt den zweiten Anschlusskörper 6 alleine. Fig. 7 zeigt den ersten Anschlusskörper 5 alleine.

## Patentansprüche

1. Kupplungseinrichtung zum kommunizierenden Verbinden von zwei fluidführenden Komponenten (3, 4), insbesondere bei einer Frischluftanlage (1),
- mit einem ersten zylindrischen Anschlusskörper (5), der mehrere, in Umfangsrichtung beabstandet angeordnete, radial nach außen vorstehende Rastelemente (7) aufweist,
- mit einem zweiten zylindrischen Anschlusskörper (6), an dem ein Sicherungsring (9) zwischen einer Verriegelungsstellung und einer Entriegelungsstellung verdrehbar gelagert ist,
- wobei der Sicherungsring (9) Durchgänge (11) aufweist, die komplementär zu den Rastelementen (7) angeordnet sind und durch welche die Rastelemente (7) in der Entriegelungsstellung des Sicherungsrings (9) axial durchführbar sind,
- wobei der Sicherungsring (9) Rastkonturen (10) aufweist, die komplementär zu den Rastelementen (7) angeordnet sind und die in der Verriegelungsstellung des Sicherungsrings (9) mit den Rastelementen (7) formschlüssig in Eingriff stehen,
- wobei die Durchgänge (11) in der Umfangsrichtung zwischen den Rastkonturen (10) angeordnet sind, und
- wobei der zweite Anschlusskörper (6) eine Ringstufe (16) aufweist, an welcher der erste Anschlusskörper (5) axial stirnseitig anliegt,
**dadurch gekennzeichnet,**
- **dass** der zweite Anschlusskörper (6) einen die Ringstufe (16) einfassenden, axial abstehenden Kragen (18) aufweist, in dem der Sicherungsring (9) drehbar angeordnet ist,
- **dass** der in den zweiten Anschlusskörper (6) eingesetzte Sicherungsring (9) am zweiten Anschlusskörper (6) verliersicher angeordnet ist.

2. Kupplungseinrichtung nach Anspruch 1,
**dadurch gekennzeichnet,**
**dass** eine Dichtung (12) vorgesehen ist, die den ersten Anschlusskörper (5) gegenüber dem zweiten Anschlusskörper (6) dichtet, und die insbesondere axial und/oder radial wirkend angeordnet sein kann.

3. Kupplungseinrichtung nach Anspruch 1 oder 2,
**dadurch gekennzeichnet,**
**dass** die Anschlusskörper (5, 6) in der Verriegelungsstellung des Sicherungsrings (9) ausschließlich durch Kraftschluss, insbesondere durch Reibschluss, relativ zueinander gegen Verdrehen gesichert sind.

4. Kupplungseinrichtung nach den Ansprüchen 2 und 3,
**dadurch gekennzeichnet,**
**dass** die gegen Verdrehen sichernde Kraft zumindest zu einem wesentlichen Anteil durch Verpressen der Dichtung (12) erzeugt wird.

5. Kupplungseinrichtung nach Anspruch 1 oder 2,
**dadurch gekennzeichnet,**
**dass** die Anschlusskörper (5, 6) im montierten Zustand durch Formschluss gegen Verdrehen gesichert sind, wobei insbesondere eine Axialführung zur Realisierung einer Verdrehsicherung vorgesehen sein kann.

6. Kupplungseinrichtung nach einem der Ansprüche 1 bis 5,
**dadurch gekennzeichnet,**
- **dass** der Sicherungsring (9) soweit formelastisch ausgestaltet ist, dass der erste Anschlusskörper (5) mit auf die Rastkonturen (10) ausgerichteten Rastelementen (7) axial steckbar und mit den Rastelementen (7) an den Rastkonturen (10) verrastbar ist, wenn sich der Sicherungsring (9) in seiner Verriegelungsstellung befindet, oder
- **dass** der Sicherungsring (9) soweit formstabil ausgestaltet ist, dass der erste Anschlusskörper (5) nur dann axial steckbar ist, wenn sich der Sicherungsring (9) in seiner Entriegelungsstellung befindet und die Rastelemente (7) auf die Durchgänge (11) ausgerichtet sind.

7. Kupplungseinrichtung nach einem der Ansprüche 1 bis 6,
**dadurch gekennzeichnet,**
- **dass** der Sicherungsring (9) an den Rastkonturen (10) in der Umfangsrichtung orientierte Einführschrägen (13) aufweist, die beim Verdrehen des Sicherungsrings in die Verriegelungsstellung die Rastelemente (7) axial in der Einsteckrichtung (14) antreiben, und/oder
- **dass** der erste Anschlusskörper (5) an den Rastelementen (7) in der Umfangsrichtung orientierte Einführschrägen (15) aufweist, die beim Verdrehen des Sicherungsrings (9) in die Verriegelungsstellung die Rastelemente (7) axial in der Einsteckrichtung (14) antreiben.

8. Kupplungseinrichtung nach einem der Ansprüche 1 bis 7,
**dadurch gekennzeichnet,**
- **dass** der Kragen (18) radial nach innen vorstehende Halteelemente (19) aufweist, die den Sicherungsring (9) zumindest in dessen Verriegelungsstellung formschlüssig übergreifen, und/oder
- **dass** der Kragen (18) zumindest einen radialen Durchbruch (20) aufweist, durch den ein Betätigungselement (21) des Sicherungsrings (9) hindurchragt und der ein Verstellen des Betätigungselements (21) innerhalb des Durchbruchs (20) zum Verdrehen des Sicherungsrings (9) zwischen der Entriegelungsstellung und der Verriegelungsstellung ermöglicht.

9. Kupplungseinrichtung nach einem der Ansprüche 1 bis 8,
**dadurch gekennzeichnet,**
**dass** zumindest einer der Anschlusskörper (5, 6) integral an der zugehörigen Komponente (3, 4) an- oder ausgeformt ist.

10. Kupplungseinrichtung nach einem der Ansprüche 1 bis 9,
**dadurch gekennzeichnet,**
**dass** es sich bei den Komponenten (3, 4) der Frischluftanlage (1) um Mitglieder der folgenden Gruppe handelt: Luftfiltergehäuse, Frischluftverteilergehäuse, Kompressorgehäuse, Verdichtergehäuse, Saugmodulgehäuse, Leitungsabschnitt, Rohr, Schlauch.

11. Frischluftanlage für eine Brennkraftmaschine, insbesondere eines Kraftfahrzeugs, mit einer Kupplungseinrichtung (2) nach einem der Ansprüche 1 bis 10, die zwei Komponenten (3, 4) der Frischluftanlage (1) miteinander kommunizierend verbindet.

## Claims

1. A coupling device for communicatingly connecting two fluid-conducting components (3, 4), in particular for a fresh-air supply system (1),
- with a first cylindrical connecting body (5) which has a plurality of radially outwardly projecting latching elements (7) arranged spaced apart in circumferential direction,
- with a second cylindrical connecting body (6) on which a locking ring (9) is rotatably mounted between a locking position and unlocking position,
- wherein the locking ring (9) has passages (11) which are arranged complementary to the latching elements (7) and through which the latching elements (7) can be axially passed through in the unlocking position of the locking ring (9),
- wherein the locking ring (9) has latching contours (10) which are arranged complementary to the locking elements (7) and which, in the locking position of the locking ring (9), are form-fittingly engaged with the latching elements (7),
- wherein the passages (11) are arranged in the circumferential direction between the latching contours (10), and
- wherein the second connecting body (6) has an annular step (16) on which the first connecting body (5) abuts axially on the front side,
**characterized in**
- **that** the second connecting body (6) has an axially projecting collar (18) which encloses the annular step (16) and in which the locking ring (9) is arranged in a rotatable manner,
- **that** the locking ring (9) inserted in the second connecting body (6) is captively arranged on the second connecting body (6).

2. The coupling device according to claim 1,
**characterized in**
**that** a seal (12) is provided which seals the first connecting body (5) with respect to the second connecting body (6) and which can be arranged in particular in an axially and/or radially acting manner.

3. The coupling device according to claim 1 or claim 2,
**characterized in**
**that** in the locking position of the locking ring (9), the connecting bodies (5, 6) are secured against rotating relative to each other solely by a force-locking connection, in particular by a frictional connection.

4. The coupling device according to the claims 2 and 3,
**characterized in**
**that** the force securing against rotation is generated at least to a substantial extent by pressing in the seal (12).

5. The coupling device according to claim 1 or claim 2,
**characterized in**
**that** in the assembled state, the connecting bodies (5, 6) are secured against rotation by a form-locking connection, wherein, in particular, an axial guide can be provided for implementing a rotation prevention.

6. The coupling device according to any one of the claims 1 to 5,
**characterized in**
- **that** the locking ring (9) is configured dimensionally elastic to such an extent that the first connecting body (5) having latching elements (7) aligned with the latching contours (10) is axially pluggable and can be latched with the latching elements (7) at the latching contours (10) if the locking ring (9) is in its locking position, or
- **that** the locking ring (9) is configured dimensionally stable to such an extent that the first connecting body (5) is axially pluggable only if the locking ring (9) is in its unlocking position and the latching elements (7) are aligned with the passages (11).

7. The coupling device according to any one of the claims 1 to 6,
**characterized in**
- **that** the locking ring (9) has lead-in chamfers (13) at the latching contours (10), which chamfers are aligned in the circumferential direction and which, when rotating the locking ring into the locking position, axially drive the latching elements (7) in the plug-in direction (14), and/or
- **that** the first connecting body (5) has lead-in chamfers (15) at the latching elements (7), which chamfers are aligned in the circumferential direction and which, when rotating the locking ring (9) into the locking position, axially drive the latching elements (7) in the plug-in direction (14).

8. The coupling device according to any one of claims 1 to 7,
**characterized in**
- **that** the collar (18) has radially inwardly projecting retaining elements (19) which encompass the locking ring (9) at least in the locking position of the same in a form-fitting manner, and/or
- **that** the collar (18) has at least one radial aperture (20) through which an actuating element (21) of the locking ring (9) projects and which allows displacing the actuating element (21) within the aperture (20) for rotating the locking ring (9) between the unlocking position and the locking position.

9. The coupling device according to any one of the claims 1 to 8,
**characterized in**
**that** at least one of the connecting bodies (5, 6) is integrally formed on or in the associated component (3, 4).

10. The coupling device according to any one of the claims 1 to 9,
**characterized in**
**that** the components (3, 4) of the fresh air supply system (1) are members of the following group: air filter housing, fresh air distribution housing, compressor housing, supercharger housing, intake module housing, line section, pipe, hose.

11. A fresh air supply system for an internal combustion engine, in particular for a motor vehicle, with a coupling device (2) according to any one of the claims 1 to 10 which connects two components (3, 4) of the fresh air supply system (1) to each other in a communicating manner.

## Revendications

1. Dispositif de couplage pour la liaison communicante de deux composants (3,4) conducteurs de fluide, notamment sur une installation de gaz frais (1),
- comportant un premier corps de raccordement (5) cylindrique, qui présente plusieurs éléments d'encliquetage (7) dépassant radialement vers l'extérieur, disposés en espacement dans la direction circonférentielle,
- comportant un deuxième corps de raccordement (6) cylindrique, sur lequel un circlip (9) est positionné de manière tournante entre une position de verrouillage et une position de déverrouillage,
- dans lequel le circlip (9) présente des passages (11), qui sont disposés complémentairement aux éléments d'encliquetage (7) et à travers lesquels les éléments d'encliquetage (7) peuvent être passés axialement en la position de déverrouillage du circlip (9),
- dans lequel le circlip (9) présente des contours d'encliquetage (10), qui sont disposés complémentairement aux éléments d'encliquetage (7) et qui viennent en prise par conjonction de forme avec les éléments d'encliquetage (7) dans la position de verrouillage du circlip (9),
- dans lequel les passages (11) sont disposés dans la direction circonférentielle entre les contours d'encliquetage (10), et
- dans lequel le deuxième corps de raccordement (6) présente un gradin annulaire (16), sur lequel le premier corps de raccordement (5) vient reposer axialement du côté frontal,
**caractérisé en ce que**,
- le deuxième corps de raccordement (6) présente un collier (18) saillant axialement, bordant le gradin annulaire (16), dans lequel le circlip (9) est disposé rotativement,
- le circlip (9) inséré dans la deuxième corps de raccordement (6) est disposé de manière imperdable sur le deuxième corps de raccordement (6).

2. Dispositif de couplage selon la revendication 1,
**caractérisé en ce que**,
un joint d'étanchéité (12) est prévu, lequel isole de manière étanche le premier corps de raccordement (5) par rapport au deuxième corps de raccordement (6), et qui peut notamment être disposé en agissant axialement et/ou radialement.

3. Dispositif de couplage selon la revendication 1 ou 2,
**caractérisé en ce que**,
les corps de raccordement (5,6) dans la position de verrouillage du circlip (9) sont sécurisés contre une torsion l'un relativement à l'autre exclusivement par conjonction de force, notamment par conjonction par friction.

4. Dispositif de couplage selon les revendications 2 et 3,
**caractérisé en ce que**,
la force sécurisant contre une torsion est générée au moins dans une fraction essentielle par pressage du joint d'étanchéité (12).

5. Dispositif de couplage selon la revendication 1 ou 2,
**caractérisé en ce que**,
les corps de raccordement (5,6) en l'état monté sont sécurisés contre une torsion par conjonction de forme, dans lequel notamment un guidage axial peut être prévu pour réaliser une sécurité anti-torsion.

6. Dispositif de couplage selon une des revendications 1 à 5,
**caractérisé en ce que**,
- le circlip (9) est conçu avec une forme plastique, dans la mesure où la premier corps de raccordement (5) peut être enfiché axialement avec les éléments d'encliquetage (7) alignés sur les contours d'encliquetage (10) et peut être encliqueté avec les éléments d'encliquetage (7) sur les contours d'encliquetage (10), quand le circlip (9) se trouve dans sa position de verrouillage, ou
- le circlip (9) est conçu avec une forme stable dans la mesure où le premier corps de raccordement (5) peut seulement être enfiché axialement quand le circlip (9) se trouve dans sa position de déverrouillage et les éléments d'encliquetage (7) sont alignés sur les passages (11).

7. Dispositif de couplage selon une des revendications 1 à 6,
**caractérisé en ce que**,
- le circlip (9) présente des biseaux d'insertion (13) orientés dans la direction circonférentielle sur les contours d'encliquetage (10), qui lors d'une torsion du circlip dans la direction de déverrouillage entraînent les éléments d'encliquetage (7) axialement dans la direction d'enfichage (14), et/ou
- le premier corps de raccordement (5) présente des biseaux d'encliquetage (15) orientés dans la direction circonférentielle sur les éléments d'encliquetage (7), qui lors d'une torsion du circlip (9) dans la direction de déverrouillage entraînent les éléments d'encliquetage (7) axialement dans la direction d'enfichage (14).

8. Dispositif de couplage selon une des revendications 1 à 7,
**caractérisé en ce que**,
- le collier (18) présente des éléments de soutien (19) dépassant radialement vers l'intérieur, qui s'imbriquent par conjonction de forme dans le circlip (9) au moins dans la direction de verrouillage de celui-ci,
- le collier (18) présente une moins une traversée radiale (20), à travers laquelle passe un élément d'actionnement (21) du circlip (9) et qui permet un déplacement de l'élément d'actionnement (21) à l'intérieur de la traversée (20) pour tourner le circlip (9) entre la position de déverrouillage et la position de verrouillage.

9. Dispositif de couplage selon une des revendications 1 à 8,
**caractérisé en ce que**,
au moins un des corps de raccordement (5,6) est façonné ou formé en un seul tenant sur le composant afférent (3,4).

10. Dispositif de couplage selon une des revendications 1 à 9,
**caractérisé en ce que**,
les composants (3,4) de l'installation de gaz frais (1) consistent en membres des groupes suivants :
logement de filtre à air, logement de distributeur d'air frais, logement de compresseur, logement de module d'aspiration, tronçon de conduite, tuyau, tuyau flexible.

11. Installation de gaz frais pour moteur à combustion interne, notamment d'un véhicule automobile, comportant un dispositif de couplage (2) selon une des revendications 1 à 10, qui relie de manière communicante deux composants (3,4) de l'installation de gaz frais (1) l'un à l'autre.
